# EUROPEAN PATENT APPLICATION

(11) **EP 2 136 568 A1**
(43) Date of publication of application: **23.12.2009**
(21) Application number: 08700812.4
(22) Date of filing: 22.01.2008
(51) Int. Cl.: H04Q 7/32

(54) **METHOD, DEVICE AND SYSTEM FOR SENSING CUSTOMIZATION APPEARANCE CONTEXT CHANGED ON TERMINAL**

(30) Priority: 06.04.2007 CN 200710100423
(71) Applicant: Huawei Technologies Co., Ltd., Longgang District, Shenzhen Guangdong 518129 (CN)
(72) Inventor: ZHAO, Hui, Shenzhen Guangdong 518129 (CN); TIAN, Linyi, Shenzhen Guangdong 518129 (CN); LI, Kepeng, Shenzhen Guangdong 518129 (CN); WANG, Rui, Shenzhen Guangdong 518129 (CN); ZHAO, Qin, Shenzhen Guangdong 518129 (CN)
(74) Representative: Thun, Clemens
(86) International application number: PCT/CN2008/070155
(87) International publication number: WO 2008/122217

(57) **Abstract**

A method, a device and a system for sensing customization appearance context changed on a terminal are provided. The method includes obtaining the changed information of the customization appearance context recorded by the terminal and according to the changed information obtained learning the change of the customization appearance context. The system includes the terminal and a server, the terminal includes a recording unit for recording the changed information of the customization appearance context on the terminal; a sending subunit for sending the changed information recorded on the recording unit; the server includes a learning unit for learning the change of the customization appearance context according to the changed information, after obtaining the changed information of the customization appearance context recorded by the terminal.

## Description

The present application claims the benefit of Chinese Patent Application No. 200710100423.0, entitled as "Method, Apparatus, and System for Sensing Change in Content of Terminal Look and Feel Customization", filed with the Chinese Patent Office on April 6, 2007, the contents of which are incorporated herein by reference in its entirety.

### Field of the Invention

The present invention relates to the field of terminal management technical, particularly to a method, apparatus and system for sensing change of content of terminal look and feel customization.

### Background of the Invention

Look and Feel Customization (LFC) is a technique for managing look and feel of a device, which may facilitate any third party to add, delete, update, and activate/deactivate terminal look and feel remotely, including subject, power on/off prompt, embedded link, menu, screen saver and background, etc. The third party can be a service provider, network operator, mobile telephone manufacturer, company, or device holder.

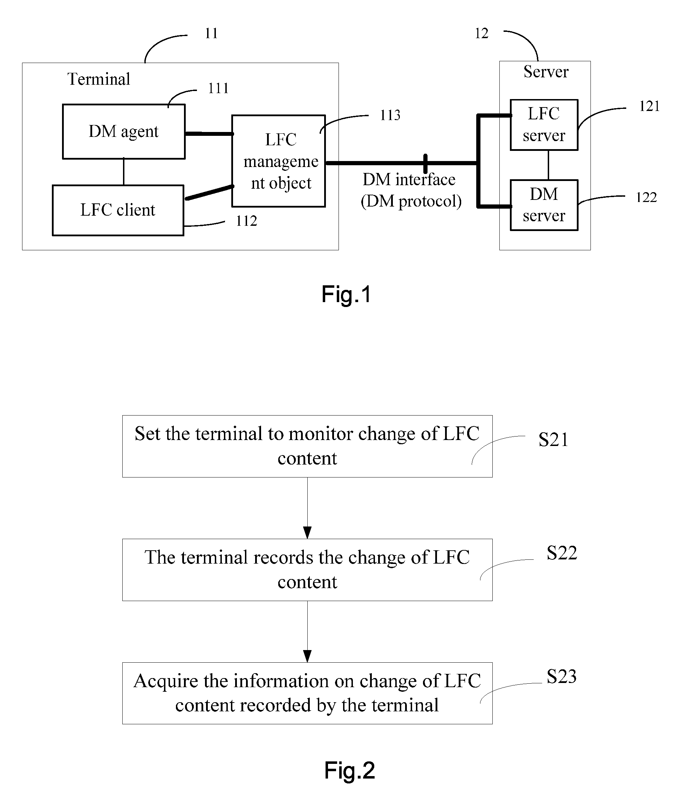

The Open Mobile Appliance (OMA) LFC technique can reuse the transmission and command management mechanism of Open Mobile Appliance Device Management (OMA DM) to provide the terminal look and feel customization function. The technique defines a standard interface for communication between LFC server and LFC client, which comprises two parts: LFC operations and LFC management objects. The LFC operations are a set of operation commands, including Add, Get, Replace, Exec, etc., which reuses standard operation commands defined in DM technique. The LFC management objects refer to objects managed via the LFC operations, which mainly include two parts: one part includes LFC elements, i.e., the types of look and feel information that may be managed on the terminal, including subject, background, screen saver, ring tone, which is typically constant on the terminal; the other part includes the available values of the LFC elements, for example, the subject available on a terminal may include Windows Mobile subject, Lenovo subject, etc., and these values can be changed dynamically. All information of the LFC objects forms a node that is attached to a device management (DM) tree for the terminal. Figure 1 shows a structural diagram of a system in which the terminal user interface is managed with LFC technique. The system includes a terminal 11 and a server 12.

The terminal 11 includes: a DM agent 111, an LFC client 112, and a DM tree 113. The server 12 includes: an LFC server 121 and a DM server 122. The server is connected to the DM tree 113 of the terminal 11 via a DM interface, and the DM agent 111 and LFC client 112 are connected to the DM tree 113 via an interface, respectively. The management process is:

The LFC server 121 sends an operation command carrying LFC elements and available values of the LFC elements to the LFC client 112 via a standard interface (for example, the DM interface). The LFC client 112 parses the operation command, processes the operation command appropriately, and feeds back the result of processing to the LFC server 121 via a standard interface. That is to say, the LFC server 121 is responsible for managing the look and feel of the terminal 11 via a standard interface; the DM agent 111 on the terminal 11 is responsible for parsing standard DM operation commands; and the LFC client 112 is responsible for parsing and processing more specific LFC management objects, so as to implement the function for customizing the look and feel of a terminal.

At present, in the prior art, the terminal look and feel is managed with a method of DM in which the management is carried out for each look and feel element, such as the screen saver, operator logo, wallpaper (background). Taking the screen saver for example, in this scheme, all screen saver records on a terminal are stored under directory:

\Customization\ScreenSavers\AvailableScreenSavers, and the screen saver that is used currently is saved under directory: \Customization\ScreenSaver\ActiveSc. The operator/SP may provide the terminal with LFC content, such as advertisement wallpaper. If using the advertisement wallpaper, the user needs to pay the operator for it. Otherwise, the user will not pay the operator for it.

However, during the process the present invention is implemented, the inventor finds the prior art has at least the following problem: above LFC content may be changed by the user or server, but the server can not sense the change of LFC content in real time; instead, the server has to query with an operation command (for example, Get) to determine whether the LFC content has been changed.

### Summary of the Invention

Embodiments Of the invention provides a method, apparatus, and system for sensing change of content of terminal look and feel customization (LFC) so as to enable the server to sense any change of specified LFC content.

To attain the above object, an embodiment of the invention provides a method for sensing change of the LFC content, including:

obtaining the information on change of LFC content that is recorded by the terminal, and determining the change of LFC content according to the information on change of LFC content.
Accordingly, an embodiment of the invention further provides a system including a terminal and a server.
The terminal includes: a recording unit adapted to record the information on change of LFC content; a sending unit adapted to send the information on change of LFC content recorded by the recording unit. The server includes an acquiring unit adapted to obtain the change information recorded by the terminal and then determine the change of LFC content according to the change information.

Accordingly, an embodiment of the invention further provides a terminal including: a monitoring and recording unit adapted to monitor and record information on change of LFC content, a sending unit adapted to send recorded information on change of LFC content.

Accordingly, an embodiment of the invention further provides a server including an acquiring unit adapted to obtain the information on change of LFC content recorded by the terminal and determine the change of LFC content according to the obtained change information.

It can be seen from the above scheme that in the embodiments of the present invention, the information on change of LFC content recorded by the terminal is obtained, and the change of LFC content is determined according to the information on change of LFC content, so that the server may sense the change of LFC content of the terminal and thereby carry out processing appropriately according to the change.

### Brief Description of the Drawings

Figure 1 is a structural diagram of a system in which the terminal user interface is managed with LFC technique in the prior art;

Figure 2 is a flow diagram of the method for sensing the change of LFC content provided in an embodiment of the invention;

Figure 3 is a flow diagram illustrating that a terminal is set to monitor change of LFC content as shown in Figure 2;

Figure 4 is a flow diagram of determining the change of LFC content by the server as shown in Figure 2;

Figure 5 is a structural diagram of a system for sensing the change of LFC content in the embodiment of the invention;

Figure 6 is another flow diagram of the method for sensing the change of LFC content provided in the embodiment of the invention;

Figure 7 is a structural diagram of the terminal in the embodiment of the invention;

Figure 8 is another flow diagram of the method for sensing the change of LFC content in the embodiment of the invention;

Figure 9 is a structural diagram of the server in the embodiment of the invention;

Figure 10 is a flow diagram of sending a configuration command for monitoring the look and feel via an LFC package by the server according to a first embodiment of the invention;

Figure 11 is a schematic diagram of design of some nodes in the LFC management objects of look and feel content shown in Figure 10;

Figure 12 is a schematic diagram of sending a configuration command for monitoring the Look and feel by the server according to a second embodiment of the invention;

Figure 13 is a schematic diagram of the design of some nodes in the DiagMon/Trap management objects shown in Figure 12;

Figure 14 is a schematic diagram of recording the information on the change of specified LFC content by the terminal according to the third embodiment of the invention;

Figure 15 is a flow diagram of reporting to the server the change of specified LFC content by the terminal according to the fourth embodiment of the present invention;

Figure 16 is a flow diagram of determining the change of specified LFC content according to the fifth embodiment of the present invention;

Figure 17 is a flow diagram of querying and determining the change of specified LFC content by the server according to the sixth embodiment of the present invention; and

Figure 18 is a flow diagram of activating a specified LFC package by the server according to the seventh embodiment of the present invention.

### Detailed Description of the Embodiments

Embodiments of the present invention will be described in detail with reference to the accompanying drawings. First, it should be noted that the meanings of the terms, words, and claims in the present invention should not be understood merely as their literal meanings or ordinary meanings; instead, the meanings shall further include the implications and concepts that are consistent with the technique of the present invention. Therefore, the configuration described in the description and shown in the drawings is only an preferred implementation scheme for the embodiments of the invention instead of listing all technical features of the invention. It should be understood that various equivalent or modified schemes that can substitute the scheme described here are available.

Hereunder the present invention will be described in detail with reference to the accompanying drawings and the embodiments.

Figure 2 is a flow diagram of a method for sensing change of LFC content according to an embodiment of the invention, and the method includes the following steps.

Step S21: A terminal is set to monitor change of LFC content;

Step S22: The terminal records the information on change of LFC content;

Step S23: Obtain the information on change of LFC content recorded by the terminal.

The method will be described in the case in which a terminal is set by a server and the server senses the change of LFC content; however, the device is not limited to a server, but can be any other device with equivalent function.

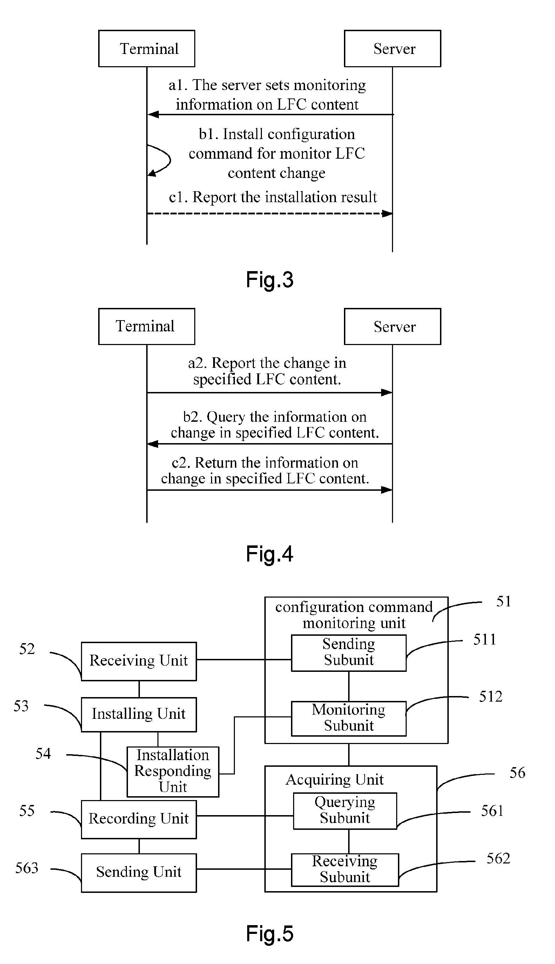

In step S21, the procedure in which the terminal is set to monitor change of Look and Feel Customization (LFC) content is shown in Figure 3, and includes the following steps:

a1. The server sends to the terminal a configuration command for monitoring the LFC content;

b1. The terminal implements the configuration command and monitors the change of LFC content;

c1. The terminal feeds back the result of implementation of the configuration command to the server.

In step a1, the configuration command for monitoring the LFC content includes, but not limited to: event to be monitored and operation to be executed. The event to be monitored refers to the LFC content related event that the server instructs the terminal to monitor, i.e., change of specified LFC content. The specified LFC content includes: configurations of specified LFC package and specified LFC elements; the change refers to any standard LFC management operation, for example, the specified LFC content is activated, deactivated, deleted, edited, or replaced under management of the server or user.

The operation to be executed refers to the operation that the server instructs the terminal to carry out when the monitored event occurs; the operation to be executed includes: record operation and report operation. The record operation refers to: the server instructs the terminal whether to record and indicates what information should be recorded by the terminal. The information to be recorded includes: specified LFC content ID and the change that occurs. The report operation refers to that the server instructs the terminal whether to report the monitored event that occurs to the server and the address information to be reported to the server.

In addition, in step a1, the server sends to the terminal the configuration command for monitoring the LFC content through at least one of the following ways.

One way is that the server sends the configuration command for monitoring the LFC content to the terminal via the LFC content. The sent LFC content includes event to be monitored and operation to be executed. The event to be monitored includes: standard LFC management operation event, such as Activate, Deactivate, Delete, Edit, Replace, etc. The operation to be executed includes: record operation and report operation. In the record operation, the information to be recorded is recorded, such as the information on change of LFC content; in the report operation, the recorded information is reported, for example, to the server. It should be noted that the LFC content now further includes the information in the configuration command for monitoring the LFC content besides the ordinary LFC content sent from the server.

Another way is that the server sends the configuration command for monitoring the LFC content to the terminal, i.e., the configuration command for monitoring the LFC content may also be sent to the terminal separately. The configuration for monitoring includes event to be monitored and operation to be executed. The event to be monitored includes object to be monitored and the occurrence of standard LFC management operation event. The object to be monitored identifies the LFC content to be monitored as instructed by the server. The standard LFC management operation event includes, but not limited to operations such as Activate, Deactivate, Delete, Edit and Replace. The operation to be executed is identical to that described in the first way, and therefore will not be further described here.

The process in which the server sends the configuration command for monitoring the LFC content to the terminal is: the server sets up an OMA DM management session (referring to the OMA DM standard for the implementation process for session setup) with the terminal; and sends an OMA DM session command for updating the corresponding management object or adding the corresponding management object after setting up the management session;

or the server sets up an OMA DL session (referring to the OMA DL standard for the implementation process for session setup) with the terminal, and sends the configuration command for monitoring the LFC content in the OMA DL session to the terminal.

When the configuration command for monitoring the LFC content is arranged in the form of an OMA DM tree on the terminal, the server may set up an OMA DM management session with the terminal to manage the configuration command for monitoring the LFC content. The management includes operations such as Read, Edit, Add and Delete.

In step b1, the terminal implements the configuration command in response to the receiving of the configuration command for monitoring LFC content, and monitors the change of LFC content. The implementation of configuration command refers to, but not limited to adding processing codes at a place where the LFC content can be changed, such as the place where the user sets the wallpaper. After the implementation is completed, the terminal may report the result of implementation of the configuration command for monitoring LFC content (including information on success or failure), i.e., the processing described in step c1.

In step S22, when detecting that the event indicated in the configuration command for monitoring LFC content occurs, the terminal records the change of LFC content. The change of specified LFC content refers to the occurrence of a standard LFC management operation event. The record of change of LFC content includes: the LFC content ID and the change information. That is to say, when detecting that the specified LFC content has been changed, the terminal determines whether to record according to the record indication in the configuration command for monitoring LFC content. If the record indication instructs to record, the terminal records the change of specified LFC content; otherwise the terminal does not record the change and terminate the procedure. The operation that the terminal records the change of specified LFC content refers to: the terminal stores the information required to be recorded in the OMA DM tree, including the specified LFC content ID and/or the change.

In step S23, the server determines the change of LFC content from the terminal in any of the following ways or any other way. One way is: the terminal reports the change of LFC content actively, i.e., step a2; in this way, the terminal may report the change of LFC content periodically or in real time. Another way is: the server sends to the terminal a command for querying the information on change of specified LFC content, i.e., step b2; in this way, the terminal searches for the information on change of specified LFC content that is recorded, and feeds back the result of the search to the server, i.e., step c2. The implementation process is shown in Figure 4.

In step a2, the terminal reports the change of LFC content actively. The change may be recorded or monitored by the terminal. That is to say, when detecting that the event indicated in the configuration command for monitoring LFC content occurs, i.e., when the specified LFC content is changed, the terminal determines whether to report to the server according to the report indication in the configuration command for monitoring LFC content. If the report indication instructs not to report, the terminal terminates the procedure, and if the report indication instructs to report, the terminal reports the change of specified LFC content to the server.

The operation in which the terminal reports the change of specified LFC content refers to that the terminal sets up an OMA DM management session with the server indicated in the configuration command for monitoring LFC content, and then sends an OMA DM Alert command to report the data. The Type of the OMA DM Alert command is predefined to inform the server of the type of the reported data. The type of reported data may be defined as follows:

org.open mobile alliance.dm.lfc-modification-report.

That is to say, the reported data includes specified LFC content ID and/or the change that occurs.

In step b2, the server sets up an OMA DM management session with the terminal, and then sends to the terminal an OMA DM command for reading or querying the information on change of specified LFC content. The terminal searches for information on change of the specified LFC content in response to the receiving of the OMA DM command, and then feeds back to the server the result of searching for information on change of specified LFC content via an OMA DM command, i.e., step c2, so that the server may sense change of specified LFC content.

Accordingly, an embodiment of the invention further provides a system for sensing change of LFC content, which includes a terminal and a server and the structural diagram is shown in Figure 5. The system includes: a recording unit 55 in the terminal, an acquiring unit 56 in the server, and/or a configuration command monitoring unit 51 in the server. The system may further include a receiving unit 52, an implementation unit 53, and an implementation responding unit 54 in the terminal. The configuration command monitoring unit 51 is adapted to set the terminal to monitor change of LFC content on the terminal. The system may further include a sending subunit 511 adapted to send a configuration command for monitoring change of LFC content and a monitoring subunit 512 adapted to monitor the result of implementation of configuration command on the terminal. The receiving unit 52 is adapted to receive the configuration command for monitoring LFC content from the sending subunit; the implementation unit 53 is adapted to implement the configuration command for monitoring LFC content; the implementation responding unit 54 is adapted to feed back the result of implementation of the implementation unit. The recording unit 55 is adapted to record the change of specified LFC content; the acquiring unit 56 is adapted to obtain the recorded change of specified LFC content. The acquiring unit 56 includes: a querying subunit 561 and/or a receiving subunit 562. The system also includes a sending subunit 563 in the terminal. The querying subunit 561 is adapted to query the information on change of specified LFC content that is recorded by the terminal; the receiving subunit 562 is adapted to receive the information on change of specified LFC content from the terminal. The sending subunit 563 is adapted to send the change of specified LFC content that is recorded by the terminal.

The implementation process is: firstly the configuration command monitoring unit 51 sends a configuration command for monitoring LFC content to the receiving unit 52 in the terminal; the receiving unit 52 notifies the implementation unit 53 to implement the configuration command in response to the receiving of the configuration command; the implementation responding unit 54 feeds back the result of implementation in response to the implementation of the configuration command on the terminal. When the specified LFC content is changed, the recording unit 55 determines whether to record the change of the specified LFC content according to the indication in the configuration command; if the indication instructs to record the change, the recording unit records the change; otherwise the recording unit does not record the change. The sending subunit 563 integrated in the terminal reports the change of specified LFC content periodically or in real time; or, the querying subunit 561 integrated in the server sets up an OMA DM management session with the terminal, and instructs the terminal to read the information on change of specified LFC content.

The functions and effects of the units in the system are described in the implementation process of the first embodiment, and therefore will not be described here.

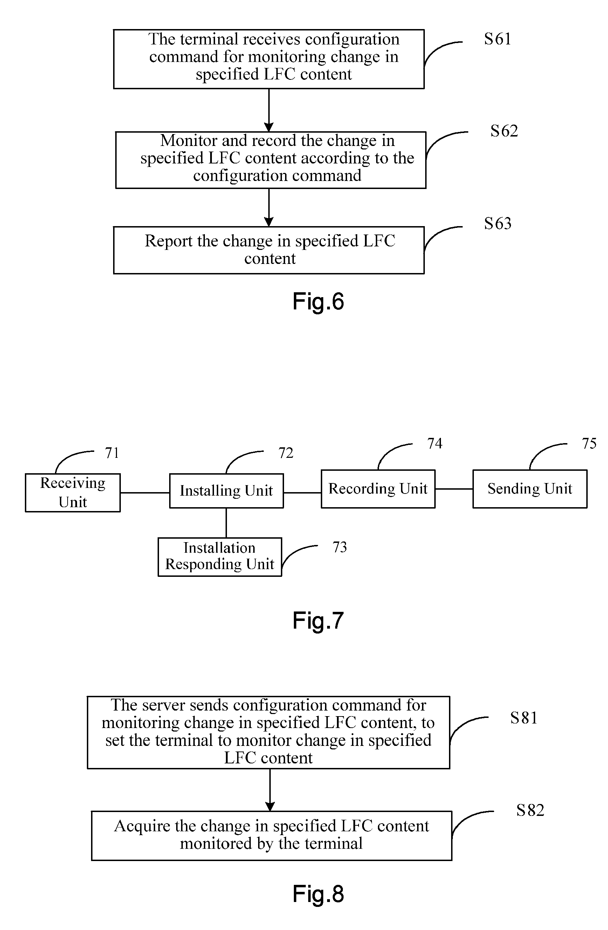

In addition, an embodiment of the invention further provides a method for sensing change of LFC content. A flow diagram of the method is shown in Figure 6 and the method includes the following steps.

Step S61: The terminal receives a configuration command for monitoring specified LFC content;

Step S62: The terminal monitors and records the information on change of specified LFC content according to the configuration command;

Step S63: The terminal reports the change of specified LFC content.

In step S61 of the embodiment, the configuration command for monitoring the change of specified LFC content received by the terminal from the server includes event to be monitored and operation to be executed; the event and operation have been described above and therefore will not be described further here. The terminal receives the configuration command for monitoring LFC content through at least one of the following ways: after an OMA DM management session is set up between the server and the terminal, the terminal receives the configuration command for monitoring the specified LFC content from the server; an OMA DL session is set up between the terminal and the server, and the terminal receives the configuration command for monitoring of the specified LFC content in the DL session from the server. Furthermore, when the configuration command for monitoring LFC content is arranged in the form of an OMA DM tree on the terminal, the server may set up an OMA DM management session (referring to the OMA DM standard for session setup) to manage the configuration command for monitoring LFC content; the management includes operations such as Read, Edit, Add and Delete.

Optionally, the terminal implements the configuration command in response to the receiving of the configuration command and feeds back the result of implementation to the server.

In step S62, the process in which the terminal records the change of specified LFC content according to the configuration command after implementing the configuration command is as follows: when detecting occurrence of the monitored event, the terminal determines whether to record the change of the specified LFC content according to the record indication in the configuration command; if the record indication instructs to record the change of the specified LFC content, including the specified LFC content ID and/or the change information, the terminal records the change; otherwise the terminal does not record the change. Subsequently, the terminal determines whether to report to the server according to the report indication in the configuration command; if the report indication instructs to report and an OMA DM connection has been established between the terminal and the server, the terminal reports the change of the specified LFC content via an OMA DM Alert command; otherwise the terminal does not report the change, i.e., step S63.

Accordingly, an embodiment of the invention further provides a terminal. A structural diagram of the terminal is shown in Figure 7. The terminal includes: a receiving unit 71, an implementation unit 72, an implementation responding unit 73, a monitoring and recording unit 74 and a sending unit 75. The receiving unit 71 is adapted to receive configuration commands for monitoring specified LFC content; the implementation unit 72 is adapted to implement the received configuration commands; the implementation responding unit 73 is adapted to feed back the result of implementation of the implementation unit 72; the monitoring and recording unit 74 is adapted to monitor and record the change of specified LFC content according to the configuration command; the sending unit 75 is adapted to send the recorded change of specified LFC content.

It should be noted that the monitoring and recording unit 74 shown in Figure 7 has the same function as the recording unit 55 shown in Figure 5, and the sending unit 75 shown in Figure 7 has the same function as the sending subunit 563 shown in Figure 5.

The functions and effects of various units in the terminal are described in the implementation process of the above embodiment, and therefore will not be described here.

Furthermore, an embodiment of the invention also provides a method for sensing change of LFC content. A structural diagram of the method is shown in Figure 8. The method includes the following steps.

Step S81: The server sends a configuration command for monitoring change of specified LFC content, so as to set the terminal to monitor any change of specified LFC content;

Step S82: The server determines the change of specified LFC content monitored by the terminal.

In step S81 of the embodiment, the sever sends a configuration command for monitoring change of specified LFC content through the following way: the server sets up an OMA DM management session (referring to the OMA DM standard for session setup) with the terminal, and then sends an OMA DM command for updating the existing corresponding MO or sends an OMA DM command for adding a new MO; and/or, an OMA DL session (see the OMA DL standard for session setup) is set up between the server and the terminal, and the server sends a configuration command for monitoring LFC change of the DL session to the terminal.

In step S82, the server queries the terminal by means of an operation for the LFC content management object and determines the change of specified LFC content according to the query result. That is to say, the server sets up an OMA DM management session with the terminal (referring to the OMA DM standard for session setup), and then sends to the terminal an OMA DM command for reading the change of specified LFC content, and thereby senses the change of specified LFC content monitored by the terminal.

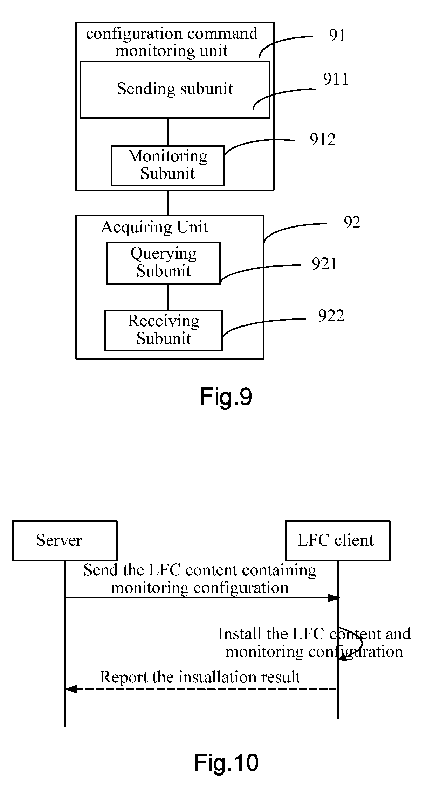

Accordingly, an embodiment of the invention further provides a server. A structural diagram of the server is shown in Figure 9. The server includes a configuration command monitoring unit 91 and an acquiring unit 92. The configuration command monitoring unit 91 is adapted to set the terminal to monitor change of specified LFC content; the acquiring unit 92 is adapted to obtain the information on change of specified LFC content.

The configuration command monitoring unit 91 includes a configuration command sending subunit 911 adapted to send a configuration command for monitoring LFC content to the terminal and thereby sets the terminal; a monitoring subunit 912 adapted to monitor the result of implementation of the configuration command on the terminal. The acquiring unit 92 includes a querying subunit 921 adapted to query the information on change of specified LFC content that is recorded by the terminal; a receiving subunit 922 adapted to receive the information on change of specified LFC content that is reported by the terminal.
It should be noted that the configuration command sending subunit 911 shown in Figure 9 has the same function as the sending subunit 511 shown in Figure 5.

The functions and effects of various units in the server are described in the implementation process of the above embodiment, and therefore will not be described here.

To make the present invention understood by those skilled in the art better, the present invention will be described in accordance with specific embodiments.

Referring to Figure 10, it is a flow diagram of sending a configuration command for monitoring LFC content via an LFC package by the server according to a first embodiment of the present invention.

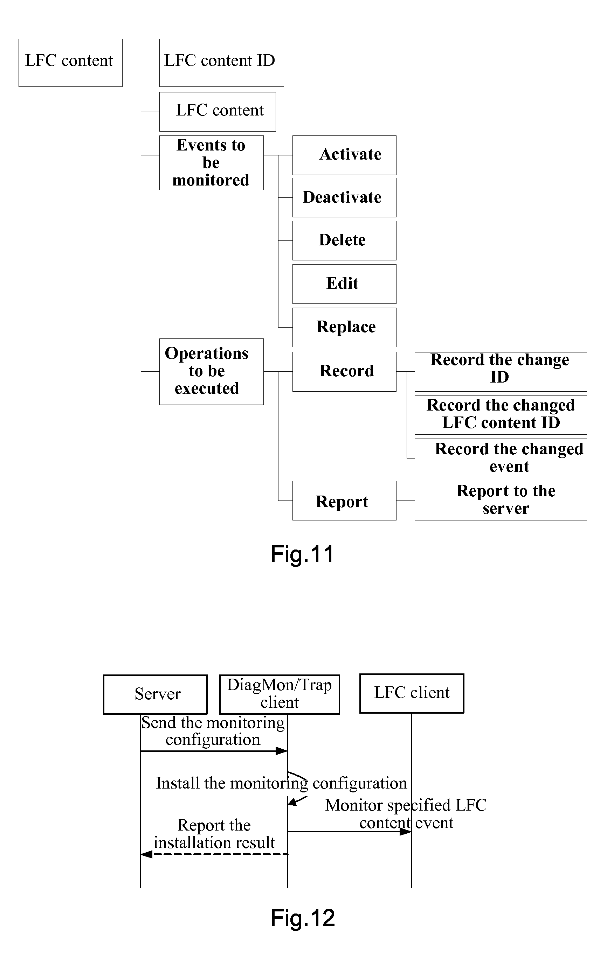

In this embodiment, the server may send and configure LFC elements with the OMA DM protocol and the sending and configuring process is: the server sets up a DM session with the terminal and then sends an OMA DM command to add new LFC content, subsequently, the server implements the configuration for monitoring the LFC content by means of the operation on the corresponding LFC content management object. The operations for the LFC content management object include Replace and Exec. A schematic diagram of the design of some nodes in LFC content management object is shown in Figure 11, in which the parts described with bold letters are the content to be set in the present invention, including, but not limited to, the events to be monitored for the LFC content and the operations to be executed for the LFC content. The LFC content to be sent includes LFC content ID, specific LFC content, events to be monitored and operations to be executed. The events to be monitored and the operations to be executed are the operations that are required to be set in the present invention. The events to be monitored include standard LFC management operation events, such as Activate, Deactivate, Delete, Edit, and Replace. The operations to be executed include record operation and report operation. In the record operation, the information to be recorded is recorded, i.e., change ID, LFC content ID that has been changed, and change event. In the report operation, the recorded information is reported, for example, to the server.

In this embodiment, the configuration command for monitoring LFC content may also be implemented based on the OMA DL protocol. The implementation method may include: the servers sends a Download Descriptor file, in which the server address, element attributes, installation instruction, and Notification address after installation are indicated. Then, the DL client sends a request to the server indicated in the Download Descriptor for downloading the LFC elements, and executes the installation after downloading. After the installation, the DL client reports the result of installation to the Notification address indicated in the Download Descriptor.

Referring to Figure 12, it is a schematic diagram of sending a configuration command for monitoring LFC content by the server according to a second embodiment of the present invention.

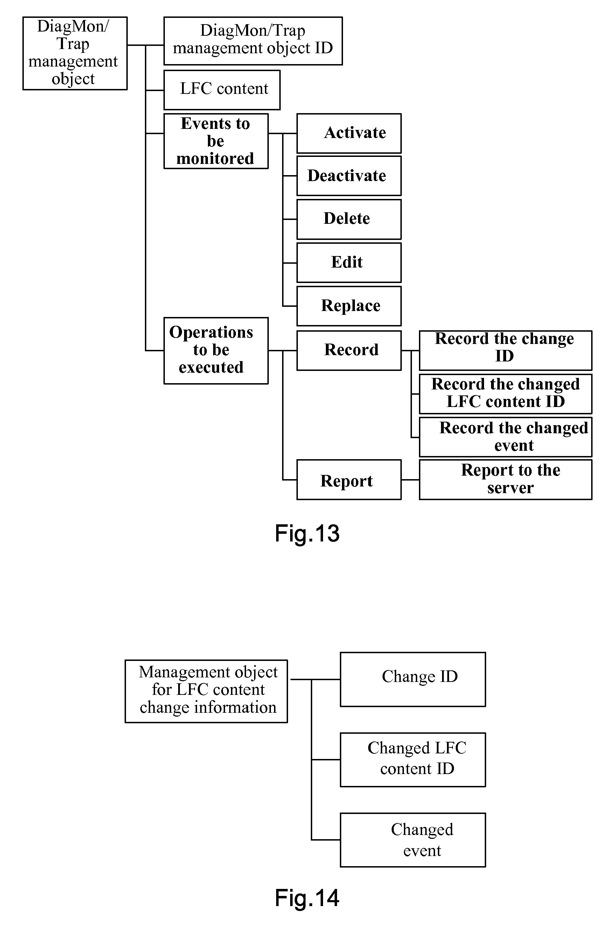

In this embodiment, the server may send the configuration command for monitoring LFC content with the OMA DM protocol; the sending and configuring process is the server sets up a DM session with the terminal and then sends an OMA DM command to add a new DiagMon/Trap management object. Next, the server implements the configuration for monitoring LFC content by means of the operation on the corresponding DiagMon/Trap management object. The operations on DiagMon/Trap management object include Replace and Exec. The design of some nodes in DiagMon/Trap management object is shown in Figure 13, which is different from that in Figure 11 in that the operations on DiagMon/Trap management object include DiagMon/Trap management object ID, events to be monitored, and operations to be executed. The events to be monitored and the operations to be executed are identical to those shown in Figure 11, and therefore will not be detailed further here. In Figure 13, the parts described in bold letters are the content that are required to be set in the present invention, including the events to be monitored for LFC content and the operations to be executed for LFC content.

In this embodiment, the configuration command for monitoring LFC content may also be implemented based on the OMA DL protocol. The implementation method may be that the server sends a Download Descriptor file, in which the server address, element attributes, installation instruction, and Notification address after installation are indicated. Then, the DL client sends a request to the server indicated in the Download Descriptor for downloading the LFC elements, and executes the installation after downloading. After the installation, the DL client reports the result of installation to the Notification address indicated in the Download Descriptor.

Referring to Figure 14, it is a schematic diagram of recording the information on change of specified LFC content by the terminal according to the third embodiment of the present invention.

When detecting a recording condition that meets the definition provided by the server, the terminal records the information on change of LFC content in the form of a DM object on the DM tree, as shown in Figure 14. In Figure 14, the value of a change ID node may be a Boolean value, for example, "True" represents that the LFC content change event specified by the server occurs, while "False" represents that the LFC content change event specified by the server does not occur. The name or ID of a registered event represented by character string can be used, for example, "lfc-modification-event" represents occurrence of an LFC content change event.

The value of a node in which the LFC content ID has been changed may be a URI value represented by character string. For example, "./LFC/Wallpaper/ad.jpg" represents the change that occurs in LFC content at a location of URI=./LFC/Wallpaper/ad.jpg in the DM tree.

The value of a change event node may be a change event name represented by character string, for example, "Deactivate" represents that the specified LFC content is deactivated.

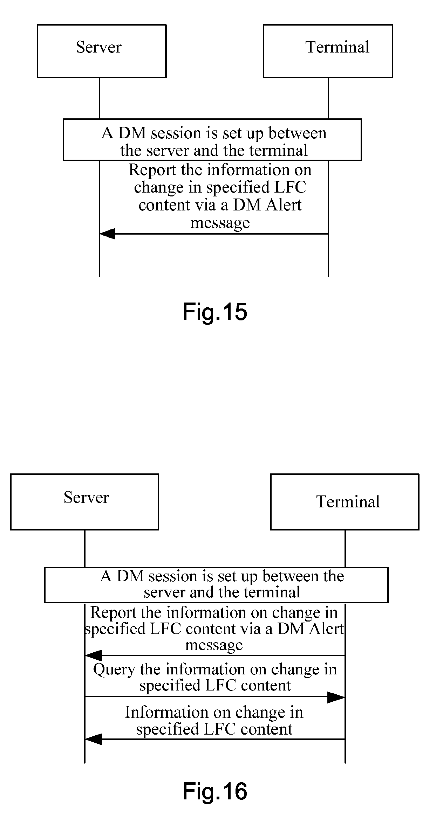

Referring to Figure 15, it is a flow diagram of reporting the change of specified LFC content by the terminal to the server according to the fourth embodiment of the present invention.

In this embodiment, the server senses the change of specified LFC content through the following process: first, a testing Alert report type is defined to notify the server of the type of the reported information; for example, the type of the reported information may be defined as follows:
org.openmobilealliance.dm.lfc-modification-report;

after a DM session connection is set up between the server and the terminal, the terminal uses an OMA DM Alert command to report the information on change of LFC content to the server. The example of the DM message that is used by the terminal to report the information on change of LFC content to the server may be as follows. In that way, the server may obtain the information on change of LFC content on the terminal.

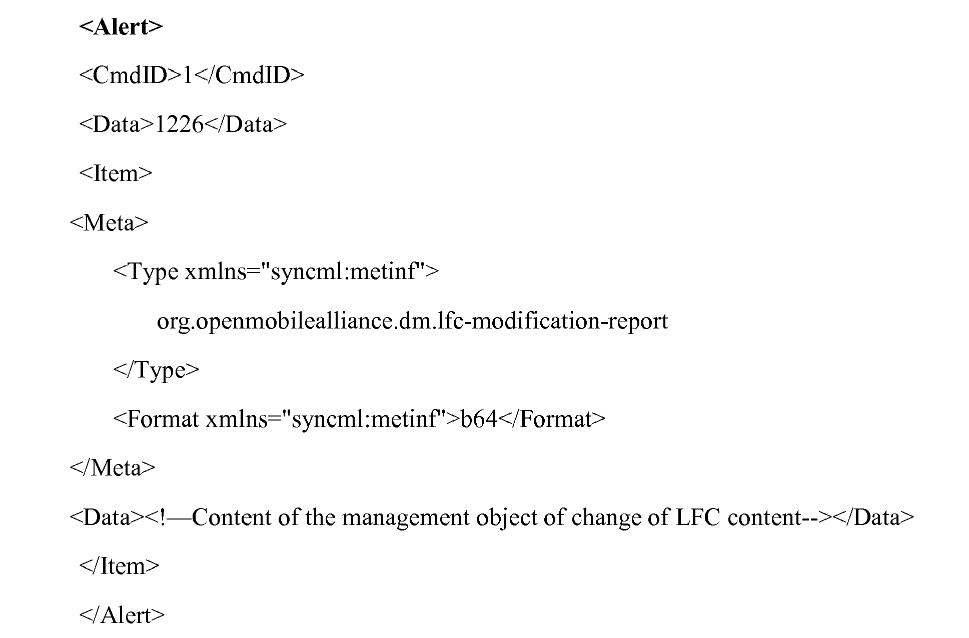

Referring to Figure 16, it is a flow diagram of querying and obtaining the information on change of specified LFC content by the server after the terminal reports the change of specified LFC content to the server according to a fifth embodiment of the present invention.

As shown in the Figure, in this embodiment, the server senses the change of specified LFC content through the following process: first, an Alert report type is defined to notify the server of the type of the reported information; the type of reported information may be defined as follows:
org.openmobilealliance.dm.lfc-modification-report;

after a DM session connection is set up between the server and the terminal, the terminal uses an OMA DM Alert command to report the information on the change of specified LFC content to the server. The example of the DM message that is used by the terminal to report the information on change of LFC content to the server may be as follows:

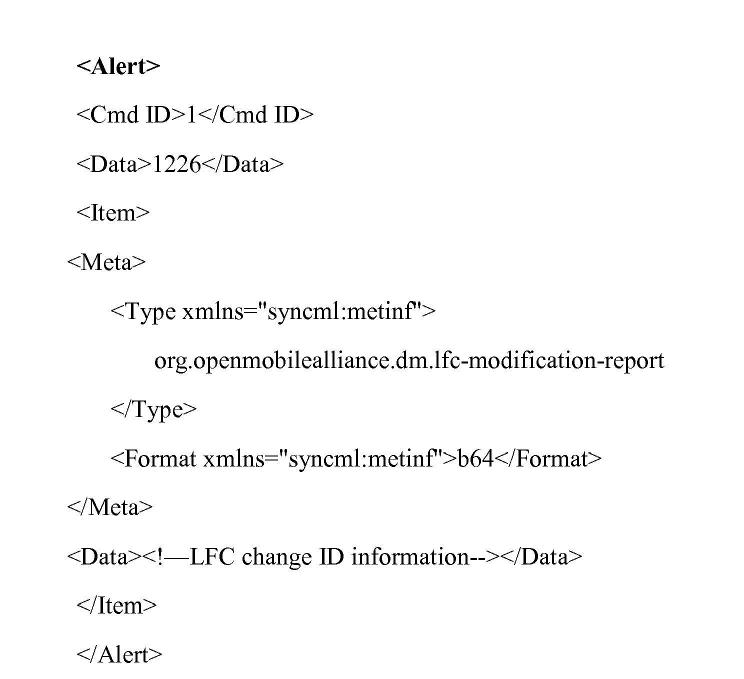

After receiving the information reported from the terminal, the server determines that an LFC content change event has occurred on the terminal. Then, the server sends an OMA DM command to query the detailed information on the management object of change of LFC content information. The terminal returns the content of the management object of change of LFC content information via an OMA DM command to the server. The server obtains the information on the change of LFC content on the terminal.

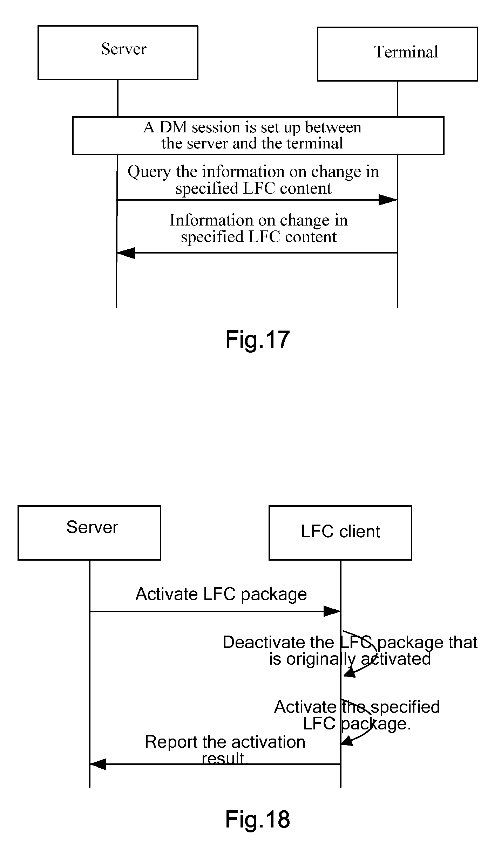

Referring to Figure 17, it is a flow diagram of querying the information on change of specified LFC content by the server according to the sixth embodiment of the present invention.

As shown in the Figure, in this embodiment, the server senses the change of specified LFC content through the following process: after a DM session connection is set up between the server and the terminal, the server sends an OMA DM command to query the management object of change of LFC content information. The terminal then returns the content of the management object of change of LFC content information via an OMA DM command to the server, and subsequently the server obtains the information on the change of LFC content on the terminal.

Referring to Figure 18, it is a flow diagram of activating a specified LFC package by the server according to a seventh embodiment of the present invention. As shown in the Figure, before the LFC package is activated, the original LFC package in active state is required to be deactivated.

In this embodiment, taking a set of all LFC elements on the terminal, including wallpaper, ring tone, and screen saver for example, the implementation process for activating a specified LFC package by the server includes the following steps.

a) The LFC package that is originally activated by the terminal includes customized wallpaper and ring tone;

b) The server sets up a DM session with the terminal, and then sends an OMA DM command to activate another LFC package that only includes a screen saver;

c) The terminal deactivates the LFC package that is originally activated, and recovers the wallpaper and ring tone to factory default;

d) The terminal activates the LFC package specified by the server, and activate the screen saver in the LFC package;

e) The terminal reports the result of activation to the server.

It can be seen from the above disclosed technical scheme that when receiving a configuration command including events to be monitored and operations to be executed for monitoring change of specified LFC content, the terminal determines whether to record the change of the specified LFC content monitored by the terminal according to the record indication in the configuration command, and reports the recorded change of the specified LFC content according to the report indication in the configuration command, and/or the server queries the information on change of specified LFC content recorded by the terminal, so that the server may sense any change of specified LFC content, and thereby carry out appropriate processing according to the change. For example, the server can establish the charging policy according to the change of specified LFC content.

While the present invention has been illustrated and described with reference to some preferred embodiments, the present invention is not limited to these. Those skilled in the art should recognize that various variations and modifications can be made without departing from the spirit and scope of the present invention as defined by the accompanying claims.

## Claims

1. A method for sensing a change of Look and Feel Customization (LFC) content, comprising:
obtaining information on the change of LFC content recorded by a terminal; and
determining change of LFC content according to the obtained change information.

2. The method according to claim 1, further comprising: before the information of change of LFC content recorded by the terminal is obtained,
sending a configuration command for monitoring LFC content to the terminal to set the terminal to monitor change of LFC content.

3. The method according to claim 2, wherein the configuration command for monitoring change of LFC content comprises an event monitoring command and an operation executing command, wherein:
the event monitoring command refers to a command used by a server for instructing the terminal to monitor the change of specified LFC content; the specified LFC content comprises: configurations of specified LFC package and specified LFC elements; the change refers to occurrence of an event of standard LFC management operation;
the operation executing command refers to a command through which the server instructs the terminal to operate in the case of the change of specified LFC content occurs, comprising: a record operation command and a report operation command; the record operation command indicates that whether the terminal needs to record the change of specified LFC content and information to be recorded; the report operation command indicates that whether the terminal needs to report the information on change of specified LFC content to the server and the address information of the server to be reported.

4. The method according to claim 2, wherein sending the configuration command for monitoring LFC content to the terminal comprises:
sending the configuration command for monitoring LFC content to the terminal; or,
sending the configuration command for monitoring LFC content via the LFC content to the terminal.

5. The method according to claim 4, wherein sending the configuration command for monitoring LFC content to the terminal comprises:
setting up an Open Mobile Appliance Device Management (OMA DM) session with the terminal, and then sending an OMA DM session command for updating a corresponding management object or adding a new corresponding management object after the OMA DM session is set up; or
setting up an Open Mobile Appliance DownLoad (OMA DL) session with the terminal, and sending, by the server, the configuration command for monitoring LFC content to the terminal in the OMA DL session.

6. The method according to claim 4, wherein sending the configuration command for monitoring LFC content via the LFC content to the terminal comprises:
setting up an OMA DM session with the terminal, and then sending an OMA DM session command carrying the LFC content and the configuration command to the terminal after the OMA DM session is set up; or,
setting up an OMA DL session with the terminal, and sending, by the server, the LFC content and the configuration command to the terminal in the OMA DL session.

7. The method according to claim 5 or 6, wherein the server sets up an OMA DM session with the terminal to manage the configuration command for monitoring LFC content, when the configuration command for monitoring LFC content is arranged in the form of a DM tree on the terminal,.

8. The method according to claim 1 or 2, wherein the information on change of LFC content recorded by the terminal comprises an LFC content ID and/or change information.

9. The method according to claim 8, wherein the information on change of LFC content is stored in an OMA DM tree by the terminal.

10. The method according to claim 1 or 2, wherein obtaining the information on change of LFC content recorded by the terminal comprises:
receiving a notification of change of LFC content that is reported actively by the terminal; or,
sending a query request to the terminal, and receiving information on change of LFC content that is returned according to the query request from the terminal.

11. The method according to claim 10, wherein sending a query request to the terminal, and receiving the information on change of LFC content that is returned according to the query request from the terminal comprises:
setting up an OMA DM session with the terminal, and then sending an OMA DM session command for reading the information on change of LFC content after the OMA DM session is set up; and
receiving the information on change of LFC content that is fed back from the terminal via an OMA DM command.

12. A system, comprising a terminal and a server, wherein:
the terminal comprises: a recording unit adapted to record information on Look and Feel Customization (LFC) content change on the terminal;
a sending subunit adapted to send the information on change of LFC content recorded by the recording unit; and
the server comprises an acquiring unit adapted to obtain the information on change of LFC content recorded by the terminal and determine the change of LFC content according to the obtained information.

13. The system according to claim 12, wherein the server further comprises:
a configuration command monitoring unit adapted to send a configuration command for monitoring LFC content to the terminal, so as to set the terminal to monitor change of LFC content.

14. The system according to claim 13, wherein the configuration command monitoring unit comprises :
a sending subunit adapted to send a configuration command for monitoring LFC content, so as to set the terminal to monitor change of LFC content;
a monitoring subunit adapted to monitor the result of implementation of the configuration command by the terminal after the configuration command sending subunit sends the configuration command.

15. The system according to claim 12, wherein the acquiring unit comprises:
a receiving subunit adapted to receive the information on change of LFC content from the terminal and determine the change of LFC content according to the change information.

16. The system according to claim 15, wherein the acquiring unit further comprises:
a querying subunit adapted to send to the terminal a request for querying the recorded information on change of LFC content;
wherein the receiving subunit receives the information on change of LFC content that is returned according to the query request from the terminal.

17. The system according to any one of claims 12-16, wherein the terminal further comprises:
a receiving unit adapted to receive the configuration command for monitoring LFC content from the server;
wherein the recording unit monitors and records the information on change of LFC content according to the configuration command received by the receiving unit.

18. The system according to claim 17, wherein the terminal further comprises:
an implementation unit adapted to implement the configuration command after the receiving unit receives the configuration command;
an implementation responding unit adapted to feed back the result of implementation performed by the implementation unit to the server;
wherein the recording unit records the information on change of LFC content on the terminal according to the configuration command after the implementation unit implements the configuration command.

19. A terminal, comprising:
a monitoring and recording unit adapted to monitor and record the information on Look and Feel Customization (LFC) content change; and
a sending unit adapted to send the recorded information on change of LFC content.

20. The terminal according to claim 19, further comprising:
a receiving unit adapted to receive the configuration command for monitoring LFC content;
wherein the monitoring and recording unit monitors and records the information on change of LFC content according to the configuration command received by the receiving unit.

21. The terminal according to claim 20, further comprising:
an implementation unit adapted to implement the configuration command after the receiving unit receives the configuration command;
an implementation responding unit adapted to feed back the result of implementation performed by the implementation unit;
wherein the monitoring and recording unit monitors and records the information on change of LFC content according to the configuration command after the implementation unit implements the configuration command.

22. A server, comprising:
an acquiring unit adapted to obtain information on Look and Feel Customization (LFC) content change that is recorded by a terminal, and determine a change of LFC content according to the obtained change information.

23. The server according to claim 22, further comprising:
a configuration command monitoring unit adapted to send a configuration command for monitoring LFC content to the terminal, so as to set the terminal to monitor change of LFC content.

24. The server according to claim 23, wherein the configuration command monitoring unit comprises :
a configuration command sending subunit adapted to send a configuration command for monitoring LFC content to the terminal, so as to set the terminal to monitor change of LFC content;
a monitoring subunit adapted to monitor the result of implementation of the configuration command by the terminal, after the configuration command sending subunit sends the configuration command.

25. The server according to any one of claims 22-24, wherein the acquiring unit comprises:
a receiving subunit adapted to receive the information on change of LFC content from the terminal and determine the change of LFC content according to the change information.

26. The server according to claim 25, wherein the acquiring unit further comprises:
a querying subunit adapted to send a request to the terminal to query the recorded information on change of LFC content;
wherein the receiving subunit receives the information on change of LFC content that is returned according to the query request from the terminal.
